(19) **Europäisches Patentamt**

**European Patent Office**

**Office européen des brevets**

(11) **EP 1 042 063 B1**

(12) **EUROPÄISCHE PATENTSCHRIFT**

(45) Veröffentlichungstag und Bekanntmachung des Hinweises auf die Patenterteilung:
**02.04.2003 Patentblatt 2003/14**

(21) Anmeldenummer: **98965284.7**

(22) Anmeldetag: **18.12.1998**

(51) Int Cl.⁷: **B01J 19/10**, B01F 11/02, C08F 2/56

(86) Internationale Anmeldenummer:
**PCT/EP98/08328**

(87) Internationale Veröffentlichungsnummer:
**WO 99/032220 (01.07.1999 Gazette 1999/26)**

(54) **VORRICHTUNG ZUM HERSTELLEN VON DISPERSEN STOFFGEMISCHEN MITTELS ULTRASCHALL UND VERWENDUNG EINER DERARTIGEN VORRICHTUNG**

DEVICE FOR PRODUCING DISPERSED SUBSTANCE MIXTURES BY MEANS OF ULTRASOUND AND THE UTILIZATION OF SUCH A DEVICE

DISPOSITIF POUR PREPARER DES MELANGES DE SUBSTANCES EN DISPERSION PAR ULTRASONS ET UTILISATION D'UN DISPOSITIF DE CE TYPE

(84) Benannte Vertragsstaaten:
**AT BE DE ES FI FR GB IT NL SE**

(30) Priorität: **19.12.1997 DE 1975687**

(43) Veröffentlichungstag der Anmeldung:
**11.10.2000 Patentblatt 2000/41**

(73) Patentinhaber: **BASF AKTIENGESELLSCHAFT**
**67056 Ludwigshafen (DE)**

(72) Erfinder:
  • **BECHTEL, Siegfried**
    **D-68623 Lampertheim (DE)**
  • **KIELHORN-BAYER, Sabine**
    **D-67133 Maxdorf (DE)**
  • **MATHAUER, Klemens**
    **D-67061 Ludwigshafen (DE)**

(74) Vertreter: **Kinzebach, Werner, Dr.**
**Patent Attorneys,**
**Reitstötter, Kinzebach & Partner,**
**Sternwartstrasse 4**
**81679 München (DE)**

(56) Entgegenhaltungen:
**GB-A- 873 798**      **GB-A- 1 209 943**
**GB-A- 1 401 072**    **GB-A- 2 248 622**
**US-A- 3 266 631**    **US-A- 4 071 225**
**US-A- 5 538 628**

  • **PATENT ABSTRACTS OF JAPAN vol. 95, no. 6, 31. Juli 1995 & JP 07 062008 A (NIPPON MEKTRON LTD.), 7. März 1995 & DATABASE WPI Section Ch, Week 9518 Derwent Publications Ltd., London, GB; Class A14, AN 95-136849 & JP 07 062008 A (NIPPON MEKTRON K.K.)**

**Beschreibung**

Die Erfindung betrifft eine Vorrichtung zum Herstellen von dispersen Stoffgemischen mittels Ultraschall und vorteilhafte Verwendungen einer derartigen Vorrichtung. Die Erfindung betrifft insbesondere eine Vorrichtung zum Herstellen von Miniemulsionen, d.h. von Emulsionen mit einem mittleren Tröpfchendurchmesser von weniger als 1 µm.

Emulsionen sind disperse Mehrphasensysteme aus mindestens zwei ineinander nahezu unlöslichen Flüssigkeiten und besitzen große Bedeutung in der Kunststoffindustrie, insbesondere der Wasch- und Reinigungsmittelindustrie, bei der Herstellung von kosmetischen oder pharmazeutischen Erzeugnissen und vor allem auch in der Lebensmitteltechnologie. Da Emulsionen zumindest eine hydrophile und eine lipophile Flüssigkeit umfassen unterscheidet man nach Art der inneren, dispersen Phase zwischen Öl-in-Wasser- (O/W) und Wasser-in-Öl- (W/O) Emulsionen. Die innere oder die äußere Phase kann selbst wieder ein disperses System sein und beispielsweise in der jeweiligen flüssigen Phase dispergierte Feststoffteilchen enthalten. Ein derartiges Gesamtsystem bezeichnet man auch als Polyphasenemulsion. Aufgrund der zwischen den Tropfen der inneren Phase und der kontinuierlichen äußeren Phase existierenden Grenzflächenspannung, sind Emulsionen im allgemeinen thermodynamisch instabil, das heißt mit der Zeit tritt eine Phasentrennung auf, die beispielsweise durch Tropfensedimentation oder -koagulation hervorgerufen werden kann. Um eine solche Phasentrennung zu verhindern, werden üblicherweise Emulgierhilfsstoffe zugegeben, beispielsweise Emulgatoren, welche die Grenzflächenspannung herabsetzen, oder Stabilisatoren, welche etwa die Sedimentation der Tröpfchen durch eine Erhöhung der Viskosität der kontinuierlichen äußeren Phase verhindern oder zumindest stark verzögern.

Beim Mischen der mindestens zwei Komponenten einer Emulsion entsteht zunächst eine grobdisperse Rohemulsion. Durch Zufuhr mechanischer Energie werden die großen Tropfen der Rohemulsion aufgebrochen und die gewünschte Feinemulsion gebildet. Die beim Emulgierprozeß erreichbare kleinste Tröpfchengröße hängt nicht nur vom jeweiligen Leistungseintrag in der Emulgiermaschine ab, sondern wird auch wesentlich von der Art und Konzentration der Emulgierhilfsstoffe beeinflußt. Beispielsweise müssen zur Erzeugung feinster Emulsionen die mechanisch gebildeten neuen Grenzflächen sehr schnell vom Emulgator besetzt werden, um ein Zusammenfließen der kleinen Tröpfchen zu verhindern.

Die mittlere Größe der Tröpfchen der dispersen Phase läßt sich nach dem Prinzip der quasielastischen dynamischen Lichtstreuung bestimmen (beispielsweise als sogenannte z-mittlerer Tröpfchendurchmesser $d_z$ der unimodalen Analyse der Autokorrelationsfunktion). In den Beispielen dieser Schrift wurde dazu ein Coulter N4 Plus Particle Analyser der Fa. Coulter Scientific Instruments verwendet.

Zur Herstellung von Emulsionen werden unterschiedlichste Dispergiermaschinen eingesetzt. Mittel- bis hochviskose Emulsionen werden hauptsächlich durch Rotor-Stator-Systeme wie Kolloidmühlen oder Zahnkranzdispergiermaschinen hergestellt. Die Herstellung von niederviskosen Emulsionen erfolgt bisher hauptsächlich mit Hochdruckhomogenisatoren (HDH). Dabei wird die Rohemulsion unter einem Druck zwischen 100 und 1000 bar in einem ca. 10 bis 200 µm hohen Radialspalt einer Homogenisierdüse entspannt. Es wird angenommen, daß der Tropfenaufbruch dabei hauptsächlich auf Kavitationswirkung zurückzuführen ist. Eine spezielle Bauart eines Hochdruckhomogenisators ist der Mikrofluidizer, der bei relativ niedrigen Drücken von etwa 100 bar arbeitet. Hochdruckhomogenisatoren weisen jedoch Nachteile auf. Der enge Radialspalt kann insbesondere beim Emulgieren von polymerisationsfähigen Stoffsystemen oder bei der Herstellung von mehrphasigen Emulsionen unter Verwendung von Feststoffpartikeln leicht verstopft werden. Die anschließend notwendige Reinigung ist zeitaufwendig und kompliziert. Außerdem entstehen durch die hohen Drücke Abdichtungsprobleme, insbesondere beim Einsatz von die Dichtstoffe angreifenden Medien. Weiterhin ist bei Hochdruckhomogenisatoren nachteilig, daß die Tropfengröße und der Durchsatz miteinander gekoppelt sind. Derartige Vorrichtungen sind daher zum Herstellen von Miniemulsionen, in deren disperse Phase Feststoffteilchen eindispergiert werden sollen, nicht geeignet.

Es ist außerdem bekannt, daß zur Herstellung von Emulsionen, zum Durchmischen von fluiden Stoffgemischen oder auch zur Desagglomeration von Partikeln Ultraschall eingesetzt werden kann.

In dem deutschen Gebrauchsmuster DE-GM 17 73 768 wird ein Gefäß zur Behandlung eines Mediums mit Ultraschall beschrieben. Die Sonotrode ist an die Gefäßaußenwand angekoppelt, so daß weder eine weitreichende Kafitationsfront noch ein zur Herstellung von Miniemulsionen ausreichender Leistungseintrag gegeben ist. In dem bekannten Gefäß ist ein als Schwimmer ausgebildeter Reflektor angeordnet, so daß ein solches Gefäß nicht druckdicht ausgebildet werden kann.

In dem Patent US 4,444,961 wird ein Verfahren zur Herstellung von Polymerkügelchen mit enger Größenverteilung beschrieben. Dabei wird die monomerhaltige Phase durch eine Lochplatte in eine kontinuierliche Phase gepreßt. Mit Hilfe eines Vibrationsgebers wird ein Kolben in Schwingungen versetzt, wodurch die nach der Lochplatte entstehenden laminaren Monomerrstrahlen zu einzelnen Tröpfchen aufgebrochen werden. Eine solche Anordnung ist aber nur zur Erzeugung von Tröpfchen mit einem Durchmesser in der Größenordnung von einem Millimeter und darüber geeignet. Andernfalls müßten die Löcher der Lochplatte sehr klein sein, was aber eine erhebliche Verstopfungsgefahr mit sich brächte. Auch die dort genannten bevorzugten Frequenzen im Bereich von ca. 100 bis 1.000 Hz sind für die Erzeugung von feinteiligen Dispersionen zu niedrig.

In der deutschen Patentanmeldung DE 39 30 052 A1 wird ein Schallwandler für sonochemische Reaktionen beschrieben. Dieser im Frequenzbereich zwischen 200 MHz und 2 GHz arbeitende Wandler ist zur Emulsionherstellung ungeeignet, da Kavitation als wesentlicher Wirkmechanismus bei der Tröpfchenzerkleinerung bei derart hohen Frequenzen nicht mehr auftritt. Auch die in diesem Dokument beschriebene Durchflußzelle ist mit Nachteilen behaftet, denn die Schallwellen werden in einem kleinen, lokalen Arbeitsbereich innerhalb der Durchflußzelle gebündelt, so daß nicht gewährleistet ist, daß das gesamte Medium gleichmäßig beschallt wird.

Aus GB 2 250 930 A ist eine Durchflußvorrichtung zur Ultraschallbehandlung von flüssigen Medien bekannt. Dabei taucht eine axial abstrahlende Sonotrode in die Durchflußzelle ein. Der Durchmesser der Sonotrode ist klein gegenüber dem Durchmesser des Reaktionsraums.

Eine vergleichbare Anordnung ist auch in dem US-Patent 5,108,654 beschrieben.

Außerdem ist aus der Europäischen Patentanmeldung EP 0 584 685 A2 ein Reaktor zum Durchführen von chemischen Reaktionen bekannt, bei dem mindestens 9 Ultraschallgeber an der Wand eines Rührkessels angebracht oder in diese integriert sind.

Diese bekannten Ultraschallvorrichtungen weisen jedoch zahlreiche Nachteile auf. Zwar kann aufgrund der Abmessungen der Strömungskanäle bzw. Reaktionsräume die von Hochdruckhomogenisatoren her bekannte Verstopfungsgefahr vermieden werden. Jedoch ist mit den bekannten Ultraschallvorrichtungen die erzielbare Tröpfchengröße nur unzureichend vorausbestimmbar. Beispielsweise hat die Anmelderin gefunden, daß die Tröpfchengröße mit zunehmender Viskosität der dispersen Phase steigt. Außerdem wird eine vom spezifischen Leistungseintrag abhängige Grenzgröße erreicht, die auch bei weiterer Erhöhung der Beschallungszeit nicht unterschritten werden kann. Auch dieser prinzipielle Tropfengrenzdurchmesser wird nur erreicht, wenn die verwendeten Emulgierhilfsstoffe die Grenzfläche hinreichend schnell belegen.

Bei den in den Reaktionsraum eintauchenden, stabförmigen Sonotroden ist die Beschallung nur auf den unmittelbar das Ende der Sonotrode umgebenden Bereich beschränkt. Der größte Teil des Reaktionsraums wird entweder gar nicht oder nur unzureichend beschallt. Eine in der deutschen Patentanmeldung DE 196 12 349 A1 beschrieben Ultraschallanordnung zu Herstellung von Emulsionen sieht vor, daß das zu emulgierende Medium über eine Düse auf eine Sonotrode gelenkt wird. Damit ist zwar gewährleistet, daß das gesamte Medium zumindest kurzfristig dem Ultraschallfeld ausgesetzt ist, jedoch besteht die Gefahr, daß Teile des Medium sehr schnell aus der Behandlungszelle ausgeleitet wird, während andere Teile relativ lange im Einflußbereich der Sonotrode verbleiben. Eine ähnliche Anordnung ist auch in dem Patent US 5,032,027 beschrieben.

Schließlich ist in Fig. 2 der deutschen Patentanmeldung DE 28 46 462 eine von zwei Sonotrodenstirnflächen gebildete Durchflußkammer dargestellt, mit deren Hilfe Emulsionen durch Einwirken von Ultraschall erzeugt werden können. Der Spalt zwischen den Sonotroden ist jedoch mit ca. 3 bis 25 mm recht schmal, so daß diese Vorrichtung beispielsweise für einen Einsatz bei der Emulsionspolymerisation im industriellen Maßstab weniger geeignet ist.

Besonders nachteilig erweist sich bei bekannten Vorrichtungen, daß eine Übertragung von im Labormaßstab ermittelten Prozeßparametern auf den großtechnischen Maßstab nicht gewährleistet ist. Der erzielbare Tropfendurchmesser hängt nämlich von zahlreichen Parametern ab, unter anderem von der Ultraschallfrequenz und -leistung, von der Schwingungsamplitude, der Beschallungszeit, der dynamischen Viskosität und Dichte der kontinuierlichen und der dispersen Phase und der Grenzflächenspannung. Werden beispielsweise im Labormaßstab für ein gegebenes Stoffsystem optimale Prozeßparameter ermittelt, so lassen sich diese Daten mit den bekannten Vorrichtungen nicht unmittelbar auf den großtechnischen Maßstab übertragen.

Der vorliegenden Erfindung liegt daher die Aufgabe zugrunde, eine Vorrichtung anzugeben, welche die direkte Übertragung von im Laborversuch gewonnenen Prozeßparametern auf die großtechnische Herstellung erlaubt. Mit der erfindungsgemäßen Vorrichtung soll es außerdem möglich sein, während des Emulgierens auch lösliche und/oder schwer lösliche Substanzen in das entstehende Mehrphasensystem einzubringen.

Gelöst wird diese Aufgabe durch die Vorrichtungengemäß An. 1 und 2 zum Herstellen von dispersen Stoffgemischen mittels Ultraschall, mit einem Gehäuse, einem in dem Gehäuse vorgesehenen Reaktionsraum und mindestens einem Mittel zum Übertragen von Ultraschallwellen, das eine freie Abstrahlfläche aufweist, die mit dem Reaktionsraum in Wirkverbindung steht, wobei die Vorrichtung dadurch gekennzeichnet ist, daß die Abstrahlfläche des Mittels zum Übertragen von Ultraschallwellen im wesentlichen der Oberfläche des Reaktionsraums entspricht bzw., wenn der Reaktionsraum ein Teilabschnitt eines Durchfluß-Reaktionskanals ist, sich im wesentlichen über die gesamte Breite des Kanals erstreckt,und daß die zu der Abstrahlfläche im wesentlichen senkrechte Tiefe des Reaktionsraums geringer als die maximale Wirkungstiefe der Ultraschallübertragungsmittel ist.

Die erfindungsgemäße Vorrichtung ist demnach so ausgebildet, daß der gesamte Reaktionsraum gleichmäßig mit Ultraschallwellen bestrahlt werden kann. Die bei herkömmlichen Ultraschallemulgiervorrichtungen auftretenden Schalltoträume werden mit der erfindungsgemäßen Vorrichtung weitgehend eliminiert.

Unter dem Begriff "Tiefe des Reaktionsraums" versteht man hier im wesentlichen den Abstand zwischen der Abstrahlfläche des Ultraschallübertragungsmittels und dem Boden des Reaktionsraums. Die effektive Wirkungstiefe des in das zu behandelnde Medium eingestrahlten Ultraschallfeldes kann als der Bereich angesehen werden, in welchem Kavitation hervorgerufen wird. Es ist nämlich hauptsächlich die Kavitation, welche bei Ultraschallverfahren die Zerkleinerung der großen Tropfen der Rohemulsion bewirkt. Für eine optimale Beschallung sollte die Tiefe des Reaktionsraums im Bereich der sog. Nahfeldlänge $l_N$ der Abstrahlfläche des Ultraschallübertragungsmittels liegen. Unter der Nahfeldlänge $l_N$ versteht man dabei die Dicke des direkt unter der Abstrahlfläche befindlichen zylindrischen Kavitationsbereichs, dessen Durchmesser dem Durchmesser der Abstrahlfläche $d_A$ entspricht. Außerhalb dieses Nahfeldes wird der Durchmesser des Kavitationsbereichs mit zunehmendem Abstand von der Abstrahlfläche geringer, bis in einem bestimmten Abstand die Kavitation vollständig zusammenbricht. Die Nahfeldlänge ergibt sich aus dem Durchmesser der Abstrahlfläche $d_A$, der Ultraschallfrequenz $f$ und der Schallgeschwindigkeit im Medium $c_M$ zu:

$$l_N = (d_A{}^2 f)/(4c_M)$$

Dabei kann die Schallgeschwindigkeit des Mediums je nach Gasgehalt beträchtlich variieren. Beispielsweise beträgt die Schallgeschwindigkeit in Wasser $c_{Wasser} \approx 1450$ m/s, während sie in Luft bei etwa 334 m/s liegt. Ist Luft jedoch in Wasser gelöst, so wird durch die Einstrahlung von Ultraschall ein Entgasungsprozeß hervorgerufen, der zu einem Gemisch von Wasser und Luftbläschen führt. In diesem Gemisch beträgt die Schallgeschwindigkeit nur noch etwa 70 m/s. Demnach kann die Nahfeldlänge bei einem Durchmesser der Abstrahlfläche von ca. 30 mm und einer Ultraschallfrequenz von ca. 30 kHz je nach Luftgehalt im Wasser zwischen ca. 5 mm und 80 mm variieren. In diesem Bereich sollte daher auch die Tiefe des Reaktionsraums liegen. Diese kann also bei der erfindungsgemäßen Vorrichtung bis zu einigen 10 mm betragen. Damit besteht auch bei Herstellung von mehrphasigen Emulsionen mit Feststoffpartikeln oder bei der Behandlung von polymerisationsfähigen Emulsionen keine Verstopfungsgefahr mehr. Außerdem wird aufgrund der großen Abmessungen des Reaktionsraums die Reinigung der Vorrichtung erleichtert.

Überraschend wurde gefunden, daß die Vorrichtung auch bei Reaktionsraumtiefen, die wesentlich größer als die Nahfeldlänge $l_N$ sind, zufriedenstellende Emulgierergebnisse liefert. Dies dürfte damit zu erklären sein, daß in der erfindungsgemäßen Vorrichtung eine hohe axiale Geschwindigkeitskomponente induziert wird, die zu einer intensiven und vollständigen Quervermischung des Mediums führt. Im Bedarfsfall kann die Vermischung außerdem durch ein zusätzliches Rührwerk weiter intensiviert werden.

Bei den sowohl im Labor- wie auch im Produktionsmaßstab herrschenden Bedingungen sind demnach Reaktionsraumtiefen bis zu 100 mm bevorzugt. Vorteilhaft sollte die Tiefe des Reaktionsraums nicht mehr als 70 mm und besonders vorteilhaft nicht mehr als 50 mm betragen. Die Reaktionsräume können prinzipiell auch eine sehr geringe Tiefe aufweisen, jedoch sind im Hinblick auf eine möglichst geringe Verstopfungsgefahr und eine leichte Reinigbarkeit sowie einen hohen Produktdurchsatz Reaktionsraumtiefen bevorzugt, die wesentlich größer als beispielsweise die üblichen Spalthöhen bei Hochdruckhomogenisatoren sind und meist über 10 mm, bevorzugt über 20 mm und besonders bevorzugt über 26 mm betragen. Gemäß einer vorteilhaften Ausführungsform der Erfindung ist die Tiefe des Reaktionsraums veränderbar, beispielsweise durch unterschiedlich tief in das Gehäuse eintauchenden Ultraschallübertragungsmittel.

Gemäß einer ersten Ausführungsform der erfindungsgemäßen Vorrichtung entspricht die Abstrahlfläche des Mittels zum Übertragen von Ultraschall im wesentlichen der Oberfläche des Reaktionsraums.

Diese Ausführungsform dient zum absatzweisen Herstellen von dispersen Stoffgemischen. Mit der erfindungsgemäßen Vorrichtung kann Ultraschall auf den gesamten Reaktionsraum einwirken. Im Reaktionsraum wird durch den axialen Schallstrahlungsdruck eine turbulente Strömung erzeugt, die eine intensive Quervermischung bewirkt. Messungen haben gezeigt, daß dabei Flüssigkeitsströmungen mit Geschwindigkeiten in der Größenordnung von 1 m/sec. erreicht werden. Diese Vorrichtung zur absatzweisen Herstellung von dispersen Stoffgemischen ist insbesondere für Labormessungen geeignet.

Gemäß einer zweiten Ausführungsform weist die erfindungsgemäße Vorrichtung eine Durchflußzelle auf. Dabei ist das Gehäuse als Durchfluß-Reaktionskanal ausgebildet, der einen Zufluß und einen Abfluß aufweist, wobei der Reaktionsraum ein Teilabschnitt des Durchflußreaktionskanals ist. Die Breite des Kanals ist die im wesentlichen senkrecht zur Strömungsrichtung verlaufende Kanalausdehnung. Erfindungsgemäß überdeckt die Abstrahlfläche demnach die gesamte Breite des Strömungskanals quer zur Strömungsrichtung. Die zu dieser Breite senkrechte Länge der Abstrahlfläche, das heißt die Länge der Abstrahlfläche in Strömungsrichtung, definiert den Wirkungsbereich des Ultraschalls. Gemäß einer vorteilhaften Varianten dieser zweiten Ausführungsform, hat der Durchfluß-Reaktionskanal einen im wesentlichen rechteckigen Querschnitt. Wird in einer Seite des Rechtecks ein ebenfalls rechteckiges Ultraschallübertragungsmittel mit entsprechenden Abmessungen eingebaut, so ist eine besonders wirksame und gleichmäßige Beschallung gewährleistet. Aufgrund der im Ultraschallfeld herrschenden turbulenten Strömungsverhältnisse, kann jedoch auch beispielsweise ein rundes Übertragungsmittel ohne Nachteile eingesetzt werden. Erfindungsgemäß können außerdem anstelle eines einzigen Ultraschallübertragungsmittels mehrere separate Übertragungsmittel angeordnet werden, die in Strömungsrichtung gesehene hintereinander geschaltet sind. Dabei können sowohl die Abstrahlflächen als auch die Tiefe des Reaktionsraums, das heißt der Abstand zwischen der Abstrahlfläche und dem Boden des Durchflußkanals variieren.

Es wurde überraschend gefunden, daß sich die mit der ersten Ausführungsform im Labormaßstab ermittelten Prozeßparameter direkt auf die Verhältnisse bei der kontinuierlichen Produktion mittels einer Durchflußzelle übertragen lassen, wenn bei der Durchflußzelle ein spezifischer Volumenstrom dv/dt gewählt wird, der einem äquivalenten Volumenstrom $dv_{äq}/dt = v/t$ entspricht, wobei v das Volumen des Reaktionsgefäßes im Labormaßstab und t die Beschallungszeit ist. "Spezifischer Volumenstrom" bezeichnet dabei den auf die Abstrahlfläche der Schallübertragungsmittel bezogenen Volumenstrom. Sind die Abstrahlflächen beim absatzweise arbeitenden Laborgerät und beim kontinuierlich arbeitenden Produktionsgerät identisch, so ist der spezifische Volumenstrom gleich dem tatsächlichen Volumenstrom.

Ein weiterer Vorteil der erfindungsgemäßen Vorrichtung ist die relativ kleine Varianz der Tröpfchengrößenverteilung, d.h. es sind sehr einheitliche Emulsionen herstellbar.

Besonders vorteilhaft ist das Mittel zum Übertragen von Ultraschallwellen als Sonotrode ausgebildet, deren der freien Abstrahlfläche abgewandtes Ende mit einem Ultraschallwandler gekoppelt ist. Die Ultraschallwellen können beispielsweise durch Ausnutzung des umgekehrten piezoelektrischen Effekts erzeugt werden. Dabei werden mit Hilfe von Generatoren hochfrequente elektrische Schwingungen (üblicherweise im Bereich von 10 bis 100 kHz, vorzugsweise zwischen 20 und 40 kHz) erzeugt, über einen piezoelektrischen Wandler in mechanische Schwingungen gleicher Frequenz umgewandelt und mit der Sonotrode als Übertragungselement in das zu beschallende Medium eingekoppelt. Mit derartigen Sonotroden sind hohe Leistungsdichten und dementsprechend weitreichende Kavitationsfronten realisierbar.

Besonders bevorzugt ist die Sonotrode als stabförmiger, axial abstrahlender $\lambda/2$(bzw. Vielfache von $\lambda/2$) -Längsschwinger ausgebildet. Eine solche Sonotrode kann beispielsweise mittels eines an einem ihrer Schwingungsknoten vorgesehenen Flansches in einer Öffnung des Gehäuses befestigt werden. Damit kann die Durchführung der Sonotrode in das Gehäuse druckdicht ausgebildet werden, so daß die Beschallung auch unter erhöhtem Druck im Reaktionsraum durchgeführt werden kann.

Gemäß einer weiteren vorteilhaften Ausbildung der erfindungsgemäßen Vorrichtung sind im Reaktionsraum Einbauten zur Verbesserung des Durchströmungs- und Durchmischungsverhaltens vorgesehen. Bei diesen Einbauten kann es sich beispielsweise um einfache Ablenkplatten oder unterschiedlichste, poröse Körper handeln.

Vorteilhafterweise ist der Reaktionsraum temperierbar.

Gemäß einer vorteilhaften Weiterbildung der erfindungsgemäßen Vorrichtung ist die Schwingungsamplitude der Sonotrode regelbar, das heißt die jeweils eingestellte Schwingungsamplitude wird online überprüft und gegebenenfalls automatisch nachgeregelt. Die Überprüfung der aktuellen Schwingungsamplitude kann beispielsweise durch einen auf der Sonotrode angebrachten piezoelektrischen Wandler oder einen Dehnungsmeßstreifen mit nachgeschalteter Auswerteelektronik erfolgen.

Die erfindungsgemäße Vorrichtung kann auch modulweise aus einzelnen Strömungskanälen mit jeweils einer oder mehreren Sonotroden zusammengesetzt sein. Bei einer derartigen Kaskadenanordnung kann auch ein Rückfluß- bzw. Kreislaufbetrieb realisiert werden. Dabei können in den einzelnen Modulen jeweils unterschiedliche Spaltabstände zwischen den Abstrahlflächen und den Zellböden gewählt bzw. verschiedene Einbauten zur Verbesserung des Durchmischungsverhaltens in die einzelnen Module integriert werden. Außerdem können in den verschiedenen Modulen die Abstrahlflächen der Sonotroden bzw. die Schwingungsamplituden variiert werden.

Eine besonders bevorzugte Verwendung der erfindungsgemäßen Vorrichtung ist in der Herstellung von feinsten Emulsionen zu sehen, dan heißt von Emulsionen mit einem Tropfendurchmesser von weniger als 1 µm, die hier als Mini-Emulsionen bezeichnet werden. Die erfindungsgemäße Vorrichtung eignet sich dabei insbesondere zur Herstellung von feinsten Emulsionen aus niederviskosen, zum Teil wäßrigen bzw. monomerhaltigen Medien, wobei die Viskosität im Bereich von einigen mPas bis zu 100 mPas liegen kann.

Die erfindungsgemäße Vorrichtung eignet sich auch zum Herstellen von mehrphasigen Emulsionen, insbesondere zum Einbinden von Feststoffpartikeln, beispielsweise eines Pulvers, in die disperse Phase derartiger dünnflüssiger Emulsionen.

Da sich die mit der erfindungsgemäßen Vorrichtung gewonnenen Erkenntnisse direkt aus dem Labormaßstab in den Produktionsmaßstab übertragen lassen, eignet sich die Vorrichtung insbesondere zum Screening von Emulgierhilfsstoffen. So läßt sich die Effektivität von Emulgierhilfsstoffen nach Art, Kombination und Konzentration in bezug auf die erreichbare Tröpfchengröße und die Stabilität der Emulsion bzw. Dispersion beurteilen.

Besonders vorteilhaft erweist sich die erfindungsgemäße Vorrichtung zur Herstellung von Polymerisatdispersionen durch radikalische, wässrige Emulsionspolymerisation ethylenisch ungesättigter Monomere, wobei wenigstens ein Teil der Monomere in Form einer Öl-in-Wasser-Emulsion vorliegt, deren disperse Phase auch eine weitere öllöslichen Komponenten enthalten kann.

Als ethylenisch ungesättigte Monomere kommen grundsätzlich alle Monomere in Betracht, die üblicherweise im Rahmen der radikalischen, wässrigen Makroemulsionspolymerisation eingesetzt werden können. Vorzugsweise wird die Hauptmenge der zu polymerisierenden Monomere von monoethylenisch ungesättigten Monomeren A mit einer Wasserlöslichkeit > 0,01 g/l gebildet. Hierzu zählen Olefine wie Ethylen oder Propen, vinylaromatische Monomere wie

Styrol, $\alpha$-Methylstyrol, o-Chlorstyrol oder Vinyltoluole, Vinyl- und Vinylidenhalogenide wie Vinyl- und Vinylidenchlorid, Ester aus Vinylalkohol und 1 bis 8 C-Atome aufweisenden Monocarbonsäuren wie Vinylacetat, Vinylpropionat, Vinyl-n-butyrat oder Vinylhexanoat, Ester aus Allylalkohol und 1 bis 8 C-Atome aufweisenden Monocarbonsäuren wie Allylacetat, Allylpropionat, Allyl-n-butyrat und Allylhexanoat, Ester aus vorzugsweise 3 bis 6 C-Atome aufweisenden $\alpha$, $\beta$-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie insbesondere Acrylsäure- und Methacrylsäuremethyl-, -ethyl-, -n-butyl-, -tert.-butyl-, -iso-butyl- und -2-ethylhexylester, Maleinsäuredimethylester oder Maleinsäure-n-butylester, Nitrile $\alpha,\beta$-monoethylenisch ungesättigter Carbonsäuren wie Acrylnitril sowie $C_{4-8}$-konjugierte Diene wie 1,3-Butadien und Isopren. Besonders bevorzugte Monomere A sind Styrol und Ester der Acryl- und Methacrylsäure mit $C_1$-$C_8$-Alkanolen.

Die Monomere A umfassen weiterhin auch solche Monomere A', deren Homopolymerisate eine erhöhte Wasserlöslichkeit (d. h. > 60 g/l bei 25 °C) aufweisen. Derartige Monomere A' dienen als modifizierende Monomere und werden in der Regel in Mengen < 20 Gew.-%, bezogen auf die Gesamtmenge der zu polymerisierenden Monomere, vorzugsweise < 10 Gew.-% und insbesondere < 5 Gew.-%, bezogen auf die zu polymerisierenden Monomere, verwendet. Beispiele für Monomere A' sind 3 bis 6 C-Atome aufweisende, monoethylenisch ungesättigte Mono- und Dicarbonsäuren und deren Amide, z. B. Acrylsäure, Methacrylsäure, Maleinsäure, Itaconsäure, Acrylamid, Methacrylamid und Maleinimid. Weitere Beispiele für Monomere A' sind ethylenisch ungesättigte Sulfonsäuren und deren wasserlösliche Salze, wie Vinylsulfonsäure, Allylsulfonsäure, Methallylsulfonsäure oder (Meth)acrylamido-2-methylpropansulfonsäure sowie ferner N-Vinyllactame mit 3 bis 6 C-Atomen, wie N-Vinylpyrrolidon.

Insbesondere für die Stabilität der Emulsion, hat es sich als vorteilhaft erwiesen, wenn die zu polymerisierenden Monomere neben den Monomeren A mit einer Wasserlöslichkeit > 0,01 g/l auch solche Monomere B umfassen, die eine Wasserlöslichkeit < 0,01 g/l (bei 25 °C und 1 atm) besitzen.

Vorzugsweise umfassen die zu polymerisierenden ethylenisch ungesättigten Monomere 50 bis 99,5 Gew.-%, bezogen auf die Gesamtmenge der Monomere A und B, insbesondere 80 bis 99 Gew.-% und ganz besonders bevorzugt 90 bis 98 Gew.-%, wenigstens eines Monomers A und 0,5 bis 50 Gew.-%, insbesondere 1 bis 20 Gew.-% und ganz besonders bevorzugt 2 bis 10 Gew.-%, wenigstens eines Monomers B.

Beispiele für Monomere B, die eine wie vorstehend geforderte geringe Wasserlöslichkeit aufweisen, sind 2- und 4-n-Butylstyrol, p-tert.-Butylstyrol, Ester aus 3 bis 6 C-Atome aufweisenden $\alpha,\beta$-monoethylenisch ungesättigten Carbonsäuren und mindestens 12 C-Atome (in der Regel bis zu 30 C-Atome) aufweisenden Alkanolen wie z. B. Laurylacrylat und Stearylacrylat. Aber auch Ester aus Vinylalkohol oder Allylalkohol und mindestens 9 C-Atome (in der Regel bis zu 30 C-Atome) aufweisenden Alkancarbonsäuren, wie z. B. Vinylnonanoat, Vinyldecanoat, Vinyllaurat und Vinylstearat, sowie im Handel befindliche Monomere VEOVA® 9-11 (VEOVA X ist ein Handelsname der Firma Shell und steht für Vinylester von Carbonsäuren, die auch als Versatic® X-Säuren bezeichnet werden), sind solche Monomere B. Aber auch Makromonomere wie Oligopropenacrylat sind solche Monomere B (ganz allgemein sind Makromonomere polymere oder oligomere Verbindungen, die wenigstens eine, meist endständige, ethylenisch ungesättigte Doppelbindung aufweisen; ihr relatives zahlenmittleres Molekulargewicht sollte für eine Verwendbarkeit als geringst wasserlösliches Monomeres B vorzugsweise nicht mehr als 100000 betragen; in der Regel wird dieses relative zahlenmittlere Molekulargewicht 1000 bis 50000 bzw. 2000 bis 50000 betragen; Makromonomere sind dem Fachmann bekannt; ihre Herstellung ist beispielsweise in Makromol. Chem. 223 (1994) S. 29 bis 46 beschrieben). Ganz allgemein kommen als geringst wasserlösliche Monomere B alle diejenigen in Betracht, deren molale Löslichkeit bei 25 °C und 1 atm in Wasser geringer als die entsprechende Löslichkeit von Laurylacrylat ist. Solche Monomeren B sind z. B. auch das Methacryloyl-Polybutylacrylat AB-6 und das Methacryloyl-Polystyrol A5-6 der Fa. Toa Gosei Kagaku KK (JP), die beide ein zahlenmittleres relatives Molekulargewicht von 6000 aufweisen. Aber auch Polyol 130 und Polyol 110 der Hüls AG (stereospezifisches, niedrigviskoses Polybutadien (75 % 1,4-cis, 24 % 1,4-trans, 1 % vinyl), dessen dynamische Viskosität bei 20 °C 3000 mPa·s beträgt) bilden als Makromonomere mit geringer Wasserlöslichkeit einsetzbare Verbindungen B.

Anstelle der Verwendung von Monomeren B kann die Stabilität der Emulsion auch durch Einsatz nicht copolymerisierbarer Verbindungen B' mit einer Wasserlöslichkeit < 0,01 g/l verbessert werden. Derartige Verbindungen B' können gemeinsam mit den Monomeren B oder anstelle der Monomeren B verwendet werden. Verbindungen B' werden vorzugsweise in Mengen weniger als 10 Gew.-%, bezogen auf die Gesamtmenge der Monomere A und B, verwendet.

Ein Beispiel für eine Verbindung B' ist Acronal® A 150 F, ein Poly-n-butylacrylat der BASF AG, dessen 50 gew.-%ige Lösung in Ethylacetat bei 23 °C und 1 atm eine Viskosität (bestimmt nach ISO 3219, DIN 53019, bei 250 s$^{-1}$) von 33 mPa·s aufweist.

Aber auch PnBa, ein Hochtemperaturlösungspolymerisat des n-Butylacrylats (120 °C in Isopropanol) mit einem bei 25 °C in Isopropanol bestimmten K-Wert von 24, kommt als Verbindung B' in Betracht. Der K-Wert ist eine relative Viskositätszahl, die in Analogie zur DIN 53726 bestimmt wird. Er beinhaltet die Fließgeschwindigkeit des reinen Lösungsmittels relativ zur Fließgeschwindigkeit der 0,1 gew.-%igen Lösung des Polymerisats im selben Lösungsmittel (vgl. auch Cellulosechemie, Vol. 13 (1932), S. 58 - 64, und Kirk-Othmer Encyclopedia of Chemical Technology, Vol. 23, S. 967 - 968). Der K-Wert ist ein Maß für das mittlere Molekulargewicht eines Polymerisats. Ein hoher K-Wert entspricht dabei einem hohen mittleren Molekulargewicht.

Mögliche Verbindungen B' sind ferner Harze wie Kollophoniumharze (vgl. Ullmanns Encycl. Techn. Chem., 4. Auflage (1976), Vol. 12, S. 525 - 538) und Kohlenwasserstoffharze (vgl. Encycl. Polym. Sci. Eng. (1987) Vol. 7, S. 758 - 782), wie z. B. Kristalex F 85 der Fa. Hercules. Beispielhaft genannt sei Foral® 85 E, ein Glycerinester von hochhydriertem Kollophoniumharz (Erweichungspunkt: 86 °C) der Fa. Hercules. Weiter kommen als Verbindungen B' Polystyrole in Betracht (vgl. C.M. Miller et al., J. Polym. Sci.: Part A: Polym. Chem. 32, 2365-2376, 1994).

Aber auch sonstige wasserunlösliche, öllösliche Substanzen wie aliphatische und aromatische Kohlenwasserstoffe (z. B. Hexadekan), Filmbildhilfsmittel oder Weichmacher wie Plastilit® 3060 der BASF (ein technisches Gemisch der Di-n-butylester von $C_4$-$C_6$-Dicarbonsäuren) kommen als mögliche Verbindungen B' in Betracht.

Die zu polymerisierenden Monomere können auch vernetzende Monomere C umfassen. Hierbei handelt es sich insbesondere um Monomere C, die wenigstens 2 nichtkonjugierte Doppelbindungen aufweisen. Derartige Monomere C werden, sofern erwünscht, in einer Menge von 0,1 bis 30 Gew.-%, bezogen auf die Gesamtmenge der zu polymerisierenden Monomere, insbesondere 0,5 bis 20 Gew.-% und ganz besonders bevorzugt 1 bis 10 Gew.-%, eingesetzt.

Geeignete Monomere C umfassen z.B. die Vinyl-, Allyl- und Methallylester der oben genannten ethylenisch ungesättigten Carbonsäuren ebenso wie die Ester dieser Säuren mit Tricyclodecenylalkohol, insbesondere die Ester der Methacrylsäure und der Acrylsäure, die Ester der oben genannten ethylenisch ungesättigten Carbonsäuren mit mehrwertigen Alkoholen, wie Ethylenglykoldiacrylat, Ethylenglykoldimethacrylat, Butandioldiacrylat, Butandioldimethacrylat, Hexandioldiacrylat, Hexandioldimethacrylat, Tris(hydroxymethyl)ethantriacrylat und -trimethacrylat, Pentaerythrittriacrylat und -trimethacrylat, ferner die Allyl- und Methallylester von polyfunktionellen Carbonsäuren, wie Diallylmaleat, Diallylfumarat, Diallylphthalat. Typische Monomere C sind auch Verbindungen, wie Divinylbenzol, Divinylharnstoff, Diallylharnstoff, Triallylcyanurat, N,N-Divinyl und N,N'-Diallylimidazolidin-2-on, sowie Methylenbisacrylamid und Methylenbismethacrylamid.

Anstelle oder gemeinsam mit den Monomeren C können auch Monomere D verwendet werden, die anstelle der wenigstens einen weiteren ethylenisch ungesättigten Bindung eine funktionelle Gruppe aufweisen, die zur nachträglichen Vernetzung des Polymerisats in der Lage ist. Beispiele für Monomere D sind N-Alkylolamide der oben genannten ethylenisch ungesättigten Carbonsäuren, z. B. N-Methylol(meth)acrylamid, die Hydroxyalkylester der oben genannten ethylenisch ungesättigten Carbonsäuren, insbesondere Hydroxyethyl(meth)acrylat, die Bisacetonylamide der oben genannten ethylenisch ungesättigten Carbonsäuren, insbesondere N,N-Bisacetonyl(meth)acrylamid, ferner die Vinyl-, Allyl- und Methallylglycidylether, Glycidylester der oben genannten ethylenisch ungesättigten Carbonsäuren, wie Glycidyl(meth)acrylat, und weiterhin die Ester von Acetylessigsäure mit den Hydroxyalkylestern der oben genannten ethylenisch ungesättigten Carbonsäuren, z. B. Acetylacetoxyethyl(meth)acrylat. Die genannten Monomere D können, sofern gewünscht, in Mengen von 0,1 bis 30 Gew.-%, bezogen auf die Gesamtmenge der zu polymerisierenden Monomere, mitpolymerisiert werden. In der Regel wird die Gesamtmenge an Monomeren C und Monomeren D 30 Gew.-% und insbesondere 10 Gew.-%, bezogen auf die Gesamtmenge der zu polymerisierenden Monomere, nicht überschreiten. In einer bevorzugten Ausführungsform umfassen die zu polymerisierenden Monomere wenigstens ein Monomer C und/oder D in einer Gesamtmenge von > 0,1 Gew.-%.

In der Regel wird die Emulsionspolymerisation so durchgeführt, dass man in einem ersten Schritt aus den zu polymerisierenden Monomeren und gegebenenfalls weiteren öl-löslichen Komponenten eine Miniemulsion erzeugt, worin die Monomertröpfchen einen Durchmesser < 1 μm aufweisen. Anschließend wird die Emulsion mit wenigstens einem Initiator unter Temperaturbedingungen, unter denen der Initiator eine radikalische Polymerisation der ethylenisch ungesättigten Bindungen auslöst, in Kontakt gebracht.

Die Herstellung der wässrigen Emulsion erfolgt dabei zweckmäßigerweise ausgehend von konventionellen grobdispersen Öl-in-Wasser-Rohemulsionen der Monomere. Anschließend wird die Rohemulsion durch Ultraschallbehandlung in der erfindungsgemäßen Vorrichtung in die Mini-Emulsion überführt.

Dabei gebräuchliche wasserlöslichen Emulgatoren umfassen sowohl anionische, kationische als auch nichtionische Emulgatoren. Vorzugsweise werden anionische und/oder nichtionische Emulgatoren verwendet. Beispiele für geeignete Emulgatoren sind ethoxylierte Mono-, Di- und Tri-Alkylphenole (EO-Grad: 3 bis 50, Alkylrest: $C_4$ bis $C_9$), ethoxylierte Fettalkohole (EO-Grad: 3 bis 50, Alkylrest: $C_8$ bis $C_{36}$) sowie Alkali- und Ammoniumsalze von Alkylsulfaten (Alkylrest: $C_8$ bis $C_{12}$), von Schwefelsäurehalbestern ethoxylierter Alkanole (EO-Grad: 4 bis 30, Alkylrest: $C_{12}$ bis $C_{18}$) und ethoxylierter Alkylphenole (EO-Grad: 3 bis 50, Alkylrest: $C_4$ bis $C_9$), von Alkylsulfonsäuren (Alkylrest: $C_{12}$ bis $C_{18}$) und von Alkylarylsulfonsäuren (Alkylrest: $C_9$ bis $C_{18}$). Bis zu 30 mol-% der Ethylenoxid-Einheiten können auch durch andere Alkylenoxideinheiten, insbesondere Propylenoxid-Einheiten, ersetzt sein. Weitere geeignete Emulgatoren finden sich in Houben-Weyl, Methoden der organischen Chemie, Band XIV/1, Makromolekulare Stoffe, Georg-Thieme Verlag, Stuttgart, 1961, Seiten 192 bis 208. Selbstverständlich können die genannten Emulgatoren auch im Gemisch mit Schutzkolloiden wie Polyvinylalkohole, modifizierte Stärken, Cellulosederivate oder Polyvinylpyrrolidon angewendet werden. Diese vermögen die Oberflächenspannung von Wasser kaum zu verringern und weisen in der Regel oberhalb von 1000 liegende relative Molekulargewichte auf.

Ferner eignen sich als Emulgatoren die Salze von Bis(phenylsulfonyl)ethern, die an wenigstens einer Phenylsulfonylgruppe eine $C_4$-$C_{24}$-Alkylgruppe aufweisen. Vorzugsweise weist die Alkylgruppe, die linear oder verzweigt sein kann, 6 bis 18 C-Atome und insbesondere 6, 12 oder 16 C-Atome auf. Vorzugsweise handelt es sich um die Natrium, Kalium oder Ammoniumsalze oder um Mischformen dieser Salze, wobei die Natriumsalze besonders bevorzugt sind. Ganz besonders vorteilhaft sind die Natriumsalze, wenn diese wenigstens eine Alkylgruppe mit 12 C-Atomen aufweisen und verzweigt sind. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company). Die genannten Verbindungen sind allgemein bekannt, z. B. aus der US-A 4 269 749, und im Handel erhältlich.

Die erfindungsgemäße Vorrichtung läßt sich vorteilhaft auch für weitere typische Anwendungsbereiche von Ultraschallbehandlungsvorrichtungen einsetzen, beispielsweise zur Desagglomeration von Feststoffpartikeln oder auch zur Entgasung von Flüssigkeiten. Die vorliegende Erfindung wird im folgenden anhand von unter Bezugnahme auf in der beigefügten Zeichnung dargestellte Ausführungsbeispiele ausführlicher beschrieben.

In der Zeichnung zeigt:

Figur 1        einen schematischen Querschnitt einer absatzweise arbeitenden Ausführungsform der erfindungsgemäßen Vorrichtung;

Figur 2        eine Schnittansicht der Vorrichtung der Figur 1 entlang der Linie II-II;

Figur 3        eine Teilansicht der Vorrichtung der Figur 3, wobei der Verlauf des Kavitationsfeldes schematisch angedeutet ist;

Figur 4        einen schematischen Querschnitt einer kontinuierlich arbeitenden Ausführungsform der erfindungsgemäßen Vorrichtung;

Figur 5        eine Schnittansicht der Vorrichtung der Figur 4 entlang der Linie V-V;

Figur 6        einen schematischen Querschnitt einer kontinuierlich arbeitenden, modulweise aufgebauten Ausführungsform der erfindungsgemäßen Vorrichtung;

Figur 7        ein Schaubild zur Abhängigkeit des Tröpfchendurchmessers vom Volumenstrom in den Versuchen gemäß Beispiel 1; und

Figuren 8a,b    zwei Schaubilder zur Abhängigkeit des Tröpfchendurchmessers von der Emulgatorkonzentration in den Versuchen gemäß Beispiel 2.

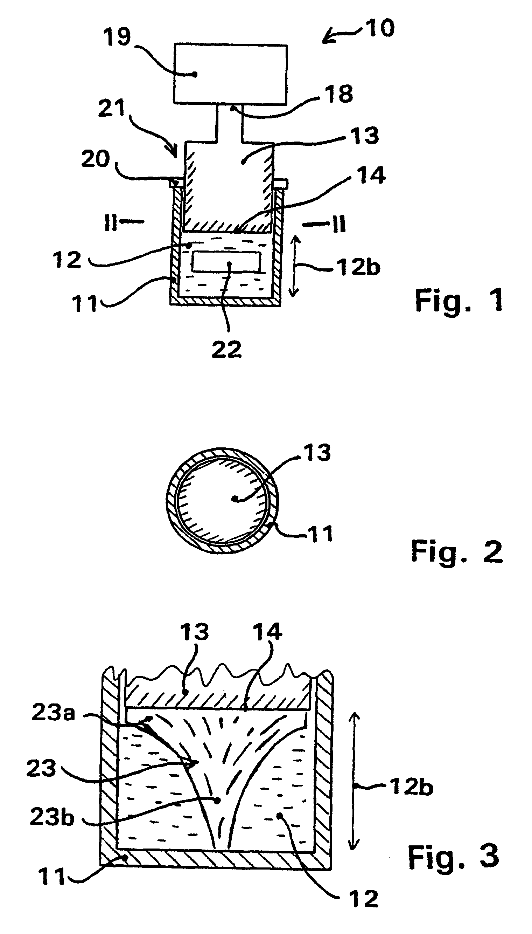

In Figur 1 ist der schematische Querschnitt einer absatzweise arbeitenden erfindungsgemäßen Ultraschallvorrichtung 10 dargestellt. Die Ultraschallvorrichtung weist ein temperierbares Gehäuse 11 auf, welches einen Reaktionsraum 12 umgibt, in dem sich das zu emulgierende Medium befindet. In das Gehäuse 11 taucht eine Sonotrode 13, mit deren Hilfe das Medium im Reaktionsraum 12 mit Ultraschall bestrahlt werden kann. Im dargestellten Beispiel ist die Sonotrode als $\lambda/2$-Längsschwinger ausgebildet, der am Schwingungsknoten durch einen Flansch 20 gehalten ist. Der Flansch 20 befindet sich an der oberen Öffnung 21 des Gehäuses 11, so daß die Sonotrode 13 druckdicht in das Gehäuse 11 geführt werden kann. Es ist jedoch auch möglich, die Sonotrode 11 ohne Abdichtflansch in den Reaktionsraum 12 des Gehäuses 11 einzutauchen. Bei der dargestellten absatzweise arbeitenden Ultraschallvorrichtung 10 entspricht die Oberfläche des Reaktionsraums 12 im wesentlichen der Abstrahlfläche 14 der Sonotrode 13. Dies wird insbesondere aus Figur 2 deutlich, die einen Schnitt der Vorrichtung der Figur 1 entlang der Linie II - II zeigt. Die Tiefe 12b des Reaktionsraums 12 ist so gewählt, daß das vom Ultraschall erzeugte Kavitationsfeld 23 über die gesamte Tiefe wirksam ist. Dieses Kavitationsfeld ist in Figur 3 detaillierter dargestellt. Man erkennt, daß das Kavitationsfeld 23 im wesentlichen aus zwei Bereichen besteht: Einem im wesentlichen zylindrischen Nahfeld 23a, dessen Durchmesser dem Durchmesser der Abstrahlfläche 14 der Sonotrode 13 entspricht. Die Tiefe des zylindrischen Bereiches wird als Nahfeldlänge $l_N$ bezeichnet. Daran schließt sich ein Fernfeld 23b an, dessen Durchmesser mit zunehmendem Abstand von der Abstrahlfläche 14 im wesentlichen exponentiell kleiner wird. Im dargestellten Beispiel sind im Reaktionsraum 12 Einbauten 22 (in Fig. 3 zur besseren Übersichtlichkeit nicht dargestellt) angeordnet, die die Durchmischung des Mediums fördern. An dem der Abstrahlfläche 14 abgewandten Ende 18 der Sonotrode 13 ist die Sonotrode mit einem Ultraschallwandler 19 verbunden. Der Ultraschallwandler 19 weist einen piezoelektrischen Kristall auf, der durch eine hochfrequente Wechselspannung zu mechanischen Schwingungen angeregt wird.

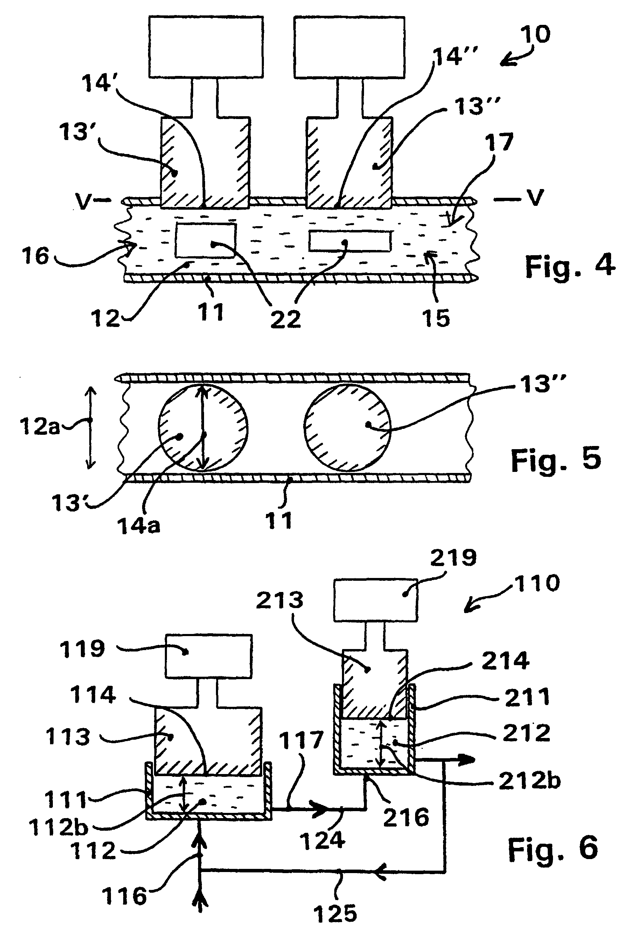

In Figur 4 ist eine kontinuierlich arbeitende Ausführungsform der erfindungsgemäßen Ultraschallvorrichtung 10 dargestellt. Elemente, die den im Zusammenhang mit der in den Figuren 1 - 3 dargestellten Ausführungsform beschriebenen Elementen entsprechen, sind mit denselben Bezugsziffern bezeichnet. Bei der kontinuierlich arbeitenden Ultraschallvorrichtung 10 ist der Reaktionsraum 12 als Strömungskanal 15 ausgebildet. Der Strömungskanal 15 weist einen Zufluß 16 und einen Abfluß 17 auf. In den Strömungskanal ragen zwei in Strömungsrichtung nacheinander angeordnete Sonotroden 13', 13''. Wie insbesondere aus Figur 5 deutlich wird, die einen Schnitt entlang der Linie V - V aus Figur 4 darstellt, sind die Abstrahlflächen 14', 14'' der Sonotroden so ausgebildet, daß die Breite 14a der Abstrahlflächen 14', 14'' im wesentlichen der Breite 12a des Reaktionsraums 12, bzw. des Durchfluß-Reaktionskanals 15 entspricht. Der Querschnitt der Sonotroden ist im dargestellten Beispiel kreisförmig. Es können jedoch auch quadratische Sonotroden verwendet werden, was zu einer noch gleichmäßigeren Beschallung über die gesamte Breite 12a des Kanals 15 führen würde.

In Figur 6 ist ein schematischer Querschnitt einer kontinuierlich arbeitenden, modular aufgebauten Ausführungsform der erfindungsgemäßen Ultraschallvorrichtung 110 dargestellt. Dabei besteht ein erstes Modul aus einem Gehäuse 111, das einen Reaktionsraum 112 umgibt. In den Reaktionsraum 112 taucht die mit einem Ultraschallwandler 119 gekoppelte Sonotrode 113 ein. Das Medium wird dem ersten Modul über einen Zufluß 116 zugeführt und fließt über einen Abfluß 117 in den Zufluß 216 eines zweiten Moduls, das aus einem Gehäuse 211 besteht, das einen Reaktionsraum 212 umgibt. In den Reaktionsraum 212 taucht eine mit einem zweiten Ultraschallwandler 219 gekoppelte zweite Sonotrode 213. Man erkennt, daß sowohl die Abstrahlflächen 114 bzw. 214 der Sonotroden 113 bzw. 213 wie auch die Tiefen 112b bzw. 212b der Reaktionsräume 112 bzw. 212 unterschiedlich sind. Die beiden Module der Ultraschallvorrichtung sind kaskadenartig durch eine Leitung 124 verbunden, wobei im dargestellten Beispiel auch ein Teilrückfluß des Mediums durch eine Rückflußleitung 125 gewährleistet ist.

**Beispiele**

Beispiel 1:

Übertragbarkeit von Batchversuchen auf kontinuierlichen Betrieb

Es wurde Emulgierversuche mit einem Rüböl/Wasser-Gemisch sowohl absatzweise im Labormaßstab als auch kontinuierlich im Technikumsmaßstab durchgeführt. Das Rüböl (Typ: Raffiniert RH6, Fa. Lesieur, Mannheim) bildete dabei in einer Konzentration von 20 % die disperse Phase. Als Emulgator wurde jeweils Steinapol®-NLS (Natriumlaurylsulfat - 1% bezogen auf die Ölphase) eingesetzt. Der Sonotroden-Durchmesser betrug 34 mm; der Gefäßdurchmesser bzw. im kontinuierlichen Betrieb die Breite der Durchflußzelle betrugen jeweils 36 mm. Die maximale Leistung der Sonotrode betrug 500 W bei einer Ultraschallfrequenz von 20 kHz. Im absatzweisen Betrieb wurde die Beschallungszeit t varriert und daraus ein äquivalenter Volumenstrom $dv_{äq}/dt = v/t$ berechnet, während im kontinuierlichen Betrieb der Volumenstrom $dv/dt$ selbst varriert wurde. Die Tropfengrößenanalyse erfolgte durch dynamische Lichtstreumessungen mit einem COULTER® N4. Gemessen wurde jeweils ein mittlerer Tropfendurchmesser, welcher als z-Mittelwert definiert ist.

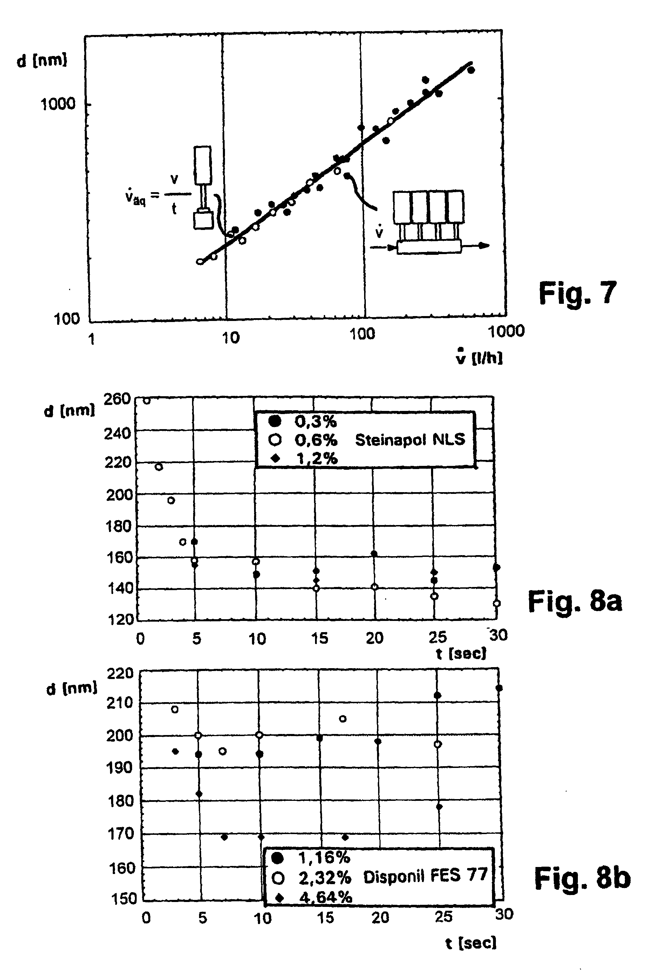

Das Ergebnis ist im Diagramm der Figur 7 gezeigt, wobei der mittlere Durchmesser der Tröpfchen in Abhängigkeit vom Volumenstrom dargestellt ist (Offen Kreise: Batch, volle Kreise: kontinuierlicher Versuch). Man erkennt eine sehr gute Übereinstimmung der in den absatzweisen, bzw. kontinuierlichen Versuchen erhaltenen Tropfendurchmessern, was die Übertragbarkeit der Laborversuche auf den Produktionsmaßstab belegt.

Beispiel 2:

Beurteilung des Einflusses der Emulgatorart und Emulgatorkonzentration auf die erreichte Tropfengröße

Zur Beurteilung des Emulgatoreinflusses wurden Emulgierversuche in einer Apparatur gemäß Figur 1 der vorliegenden Erfindung durchgeführt (allerdings in einer offen Gefäßanordnung, d.h. ohne Abdichtflansch). Die sonstigen Versuchsbedingungen entsprechen denen des Beispiels 1. Als Einsatzstoffe wurden eine 20%ige Monomermischung (95 % Styrol/ 5% Stearyl-Acrylat) in Wasser gewählt. Als Emulgatoren wurden Steinapol®-NLS und Disponil® FES 77 (eingetragenes Warenzeichen der Fa. Henkel) gewählt. Die Konzentration des Emulgators betrug 0,3%, 0,6% bzw. 1,2% NLS bezogen auf die Monomerphase bzw. äquimolare Mengen des Emulgators Disponil FES 77. Die Beschallungszeit lag jeweils zwischen 1 und 25 Sekunden. Die Ultraschall-Leistung lag jeweils bei $1{,}6 \cdot 10^7$ W/m$^3$.

Die Ergebnisse sind in den Schaubildern der Figuren 8a,8b als Tröpfchendurchmesser d in Abhängigkeit von der Beschallungszeit t dargestellt. Bei dem hier untersuchten System wurde die kleinste Tropfengröße (ca. 140 Nanometer) und die stabilsten Emulsionen mit dem Emulgator Steinapol NLS in einer Konzentration von 0,6 % bezogen auf die Monomerphase erreicht. Ungeeigneter für dieses Stoffsystem ist der Emulgator Disponil FES 77.

Die Beispiele 1 und 2 belegen, daß mit Hilfe der vorliegenden Erfindung schon im Labormaßstab sehr schnell und einfach der Einfluß der Emulgatorart und -konzentration (auch die Kombination verschiedener Emulgatoren) sowie der Einfluß der Leistungsdichte in Bezug auf das Emulgierergebnis, letztlich also auf den Tropfendurchmesser, für verschiedene Stoffsysteme beurteilt werden kann.

Beispiel 3:

Kontinuierliche Herstellung einer Emulsion mit Tropfengrößen deutlich kleiner als 1 μm

Zur kontinuierlichen Emulgierung wurde eine Durchflußvorrichtung eingesetzt, wie sie in den Figuren 4 und 5 schematisch dargestellt ist, allerdings ohne Einbauten zur Verbesserung des Durchströmungs- und Durchmischungsverhaltens. Es wurde folgendes Stoffsystem untersucht: 20% Monomerenmischung (bestehend aus 95% Styrol / 5% Stearylacrylat) und 80% Wasser. Als Emulgator wurde Steinapol NLS in einer Konzentration von 0,6% bezogen auf die Monomerphase eingesetzt. Die jeweils erzielten Tropfengrößen sind in Tabelle 1 dargestellt:

Tabelle 1:

| Versuch-Nr. | Massenstrom [kg/h] | Tropfendurchmesser [nm] |
|---|---|---|
| 1 | 7,5 | 191 |
| 2 | 16,4 | 205 |
| 3 | 3,25 | 152 |
| 4 | 3,8 | 155 |
| 5 | 8,5 | 188 |
| 6 | 6,4 | 174 |
| 7 | 13,2 | 187 |

Die Ergebnisse zeigen, daß mit der erfindungsgemäßen Vorrichtung Miniemulsionen mit einem hohen Durchsatz hergestellt werden können. Im Hinblick auf den erreichbaren Tropfendurchmesser vergleichbare Emulgierergebnisse können auch mit anderen Stoffsystemen erzielt werden. Größere Massenströme sind durch entsprechende Modifikationen der erfindungsgemäßen Vorrichtung leicht zu erreichen.

Beispiel 4: Entgasung

Mit einer offenen, ansonsten aber der in Figur 1 dargestellten Vorrichtung entsprechenden Apparatur wurden Versuche durchgeführt, Flüssigkeiten zu entgasen. Dazu wurden 1000 g einer 20%-igen Monomerlösung (bestehend aus 80% n-Butylacrylat und 20% Stearylacrylat) und 80% Wasser beschallt. Die Messung der Konzentration des gelösten Sauerstoffs erfolgte mit einem Process Unit 73 $O_2$ der Firma Knick und einer auf dem Prinzip der elektrochemischen Sauerstoffmessung beruhenden Meßsonde der Firma Mettler. In der Lösung wurde vor der Beschallung durch Begasung mit Luftsauerstoff über eine Fritte eine Sauerstoff-Sättigungskonzentration von 9 mg $O_2$ / 1 (bei 20°C) eingestellt.

Bei Ultraschall-Beschallung sank die Konzentration an gelöstem Sauerstoff in der Monomor/Wassermischung innerhalb von fünf Minuten von 9 mg $O_2$/l auf 7,5 mg $O_2$/l. Durch gleichzeitiges Beschallen und Eingasen von Stickstoff über eine Fritte konnte ein drastische Herabsetzung der Konzentration an gelöstem Sauerstoff erzielt werden. So betrug in diesem Fall nach 5 Minuten Beschallungszeit die Konzentration an gelöstem Sauerstoff weniger als 1 mg $O_2$/1. Dagegen führte ein reines Eingasen von Stickstoff, d.h. ohne zusätzliche Beschallung, nur zu einer Verringerung der Konzentration an gelöstem Sauerstoff auf Werte von 5 mg $O_2$ /1.

Beispiel 5: Desagglomeration

Eine Lucarotin-Dispersion (20 A), die ursprünglich eine Teilchgrößenverteilung zwischen 1 und 10 μm aufwies, zeigte bei Versuchsbeginn Teilchengrößen zwischen 1 und 100 μm, d.h. es lagen Agglomerate vor. Die Bestimmung der Teilchengrößen erfolgte durch Laser-Lichtstreuung (Fraunhoferbeugung).

Mit einer Vorrichtung wie in Beispiel 4 wurde die agglomerierte Dispersion beschallt. Nach einer Beschallungszeit von 20 Sekunden im intensiven Ultraschallfeld konnte wieder eine Teilchengrößenverteilung zwischen ca. 1 und 10 μm gemessen werden.

**Patentansprüche**

1. Vorrichtung zum Herstellen von dispersen Stoffgemischen mittels Ultraschall, mit
einem Gehäuse (11),
einem in dem Gehäuse vorgesehenen Reaktionsraum (12)
und mindestens einer Sonotrode (13), die eine freie Abstrahlfläche (14) aufweist, die direkt mit dem Reaktionsraum (12) in Wirkverbindung steht, und deren der freien Abstrahlfläche abgewandtes Ende (18) mit einem Ultraschallwandler (19) gekoppelt ist,
**dadurch gekennzeichnet,**
**daß** die Sonotrode (13) als stabförmiger, axial abstrahlender Längsschwinger ausgebildet ist, wobei die Abstrahlfläche (14) im wesentlichen der Oberfläche des Reaktionsraums (12) entspricht,
und **daß** die zu der Abstrahlfläche (14) im wesentlichen senkrechte Tiefe (12b) des Reaktionsraums (12) geringer als die maximale Wirkungstiefe der Sonotrode (13) ist.

2. Vorrichtung zum Herstellen von dispersen Stoffgemischen mittels Ultraschall, mit
einem Gehäuse (11),
einem in dem Gehäuse vorgesehenen Reaktionsraum (12), der als ein Teilabschnitt eines Durchfluß-Reaktionskanals (15) ausgebildet ist,
und mindestens einer Sonotrode (13), die eine freie Abstrahlfläche (14) aufweist, die direkt mit dem Reaktionsraum (12) in Wirkverbindung steht, und deren der freien Abstrahlfläche abgewandtes Ende (18) mit einem Ultraschallwandler (19) gekoppelt ist,
**dadurch gekennzeichnet,**
**daß** die Sonotrode (13) als stabförmiger, axial abstrahlender Längsschwinger ausgebildet ist, wobei die Abstrahlfläche (14) der Sonotrode (13) sich im wesentlichen über die gesamte Breite des Kanals (15) ersteckt,
und **daß** die zu der Abstrahlfläche (14) im wesentlichen senkrechte Tiefe (12b) des Reaktionsraums (12) geringer als die maximale Wirkungstiefe der Sonotrode (13) ist.

3. Vorrichtung gemäß einem der Ansprühe 1 oder 2, **dadurch gekennzeichnet, daß** die Tiefe (12b) des Reaktionsraums (12) veränderbar ist.

4. Vorrichtung gemäß Anspruch 2, **dadurch gekennzeichnet, daß** der Durchfluß-Reaktionskanal (15) einen im wesentlichen rechtekkigen Querschnitt hat.

5. Vorrichtung gemäß einem der Ansprüche 1 bis 4, **dadurch gekennzeichnet, daß** die Sonotrode (13) ein $\lambda/2$(oder Vielfaches)-Längsschwinger ist, der durch einen an einem Schwingungsknoten vorgesehenen Flansch (20) in einer Öffnung (21) des Gehäuses (11) befestigt ist.

6. Vorrichtung gemäß einem der Ansprüche 1 bis 5, **dadurch gekennzeichnet, daß** der Reaktionsraum (12) Einbauten (22) zur Verbesserung des Durchströmungs- und Durchmischungsverhaltens aufweist.

7. Verwendung einer absatzweise, im Labormaßstab arbeitenden Vorrichtung nach Anspruch 1 zur Auslegung einer im Produktionsmaßstab arbeitenden Durchflußvorrichtung nach Anspruch 2.

8. Verwendung einer Vorrichtung nach einem der Ansprüche 1 bis 6 zum Herstellen von Miniemulsionen, insbesondere von mehrphasigen Miniemulsionen, mit einem mittleren Tropfendurchmesser von weniger als 1 μm.

9. Verwendung gemäß Anspruch 8 zur Herstellung von Polymerisatdispersionen durch radikalische, wässrige Emulsionspolymerisation ethylenisch ungesättigter Monomere.

10. Verwendung gemäß einem der Ansprüche 8 oder 9, wobei pulverförmige Feststoffe in eine disperse Phase der Emulsion eingebunden werden.

11. Verwendung einer Vorrichtung nach einem der Ansprüche 1 bis 6 zum Screening von Emulgierhilfsstoffen.

**Revendications**

1. Dispositif pour la préparation de mélanges de substances en dispersion au moyen d'ultrasons, ayant

un boîtier (11),
un espace de réaction (12) prévu dans le boîtier
et au moins une sonotrode (13), qui présente une surface libre radiante (14), qui est directement en contact actif avec l'espace de réaction (12), et dont l'extrémité (18) opposée à la surface libre radiante est connectée à un transducteur d'ultrasons (19),
**caractérisé par le fait que** la sonotrode (13) a la forme d'un oscillateur longitudinal à rayonnement axial, en forme de tige, tandis que la surface radiante (14) correspond substantiellement à la surface de l'espace de réaction (12), et que la profondeur (12b) de l'espace de réaction (12) substantiellement perpendiculaire à la surface radiante (14) est plus faible que la profondeur d'action maximale de la sonotrode (13).

2. Dispositif pour la préparation de mélanges de substances dispersés au moyen d'ultrasons, ayant
un boîtier (11),
un espace de réaction (12) prévu dans le boîtier, qui a la forme d'une section partielle d'un canal de réaction à circulation (15),
et au moins une sonotrode (13), qui présente une surface libre radiante (14), qui est directement en contact actif avec l'espace de réaction (12), et dont l'extrémité (18) opposée à la surface libre radiante est connectée à un transducteur d'ultrasons (19),
**caractérisé par le fait que** la sonotrode (13) a la forme d'un oscillateur longitudinal à rayonnement axial, en forme de tige, tandis que la surface radiante (14) de la sonotrode (13) s'étend substantiellement sur toute la largeur du canal (15),
et que la profondeur (12b) de l'espace de réaction (12) substantiellement perpendiculaire à la surface radiante (14) est plus faible que la profondeur d'action maximale de la sonotrode (13).

3. Dispositif selon l'une des revendications 1 ou 2, **caractérisé par le fait que** la profondeur (12b) de l'espace de réaction (12) est modifiable.

4. Dispositif selon la revendication 2, **caractérisé par le fait que** le canal de réaction à circulation (15) a une section transversale substantiellement rectangulaire.

5. Dispositif selon l'une des revendications 1 à 4, **caractérisé par le fait que** la sonotrode (13) est un oscillateur longitudinal $\lambda/2$ (ou multiple), qui est fixé par une bride (20) disposée sur un noeud de vibration dans une ouverture (21) du boîtier (11).

6. Dispositif selon l'une des revendications 1 à 5, **caractérisé par le fait que** l'espace de réaction (12) présente des chicanes (22) pour l'amélioration du comportement de circulation et de brassage.

7. Utilisation d'un dispositif selon la revendication 1, fonctionnant en discontinu à l'échelle du laboratoire, pour l'élaboration d'un dispositif à circulation selon la revendication 2 fonctionnant à l'échelle de la production.

8. Utilisation d'un dispositif selon l'une des revendications 1 à 6 pour la préparation de mini-émulsions, en particulier de mini-émulsions à plusieurs phases, ayant un diamètre de gouttes moyen inférieur à 1 $\mu$m.

9. Utilisation selon la revendication 8 pour la préparation de dispersions de polymères par polymérisation radicalaire, en émulsion aqueuse de monomères à insaturations éthyléniques.

10. Utilisation selon l'une des revendications 8 ou 9, tandis que des solides pulvérulents sont intégrés dans une phase dispersée de l'émulsion.

11. Utilisation d'un dispositif selon l'une des revendications 1 à 6 pour le criblage d'adjuvants d'émulsification.

**Claims**

1. A device for producing disperse mixtures by means of ultrasound, having
a housing (11),
a reaction chamber (12) within the housing
and at least one sonotrode (13) having a free emitting surface (14) which is directly in effective connection with the reaction chamber (12), and whose end (18) remote from the free emitting surface is coupled to an ultrasonic transducer (19),
**characterized**
**in that** the sonotrode (13) is designed as a rod-shaped, axially emitting longitudinal oscillator wherein the emitting surface (14) corresponds essentially to the surface of the reaction chamber (12)
and **in that** the reaction chamber (12) depth (12b) which is essentially vertical with respect to the emitting surface (14) is lower than the maximum effective depth of the sonotrode (13).

2. A device for producing disperse mixtures by means of ultrasound, having
   a housing (11),
   a reaction chamber (12) within the housing, said reaction chamber being a subsection of a through-flow reaction channel (15),
   and at least one sonotrode (13) having a free emitting surface (14) which is directly in effective connection with the reaction chamber (12), and whose end (18) remote from the free emitting surface is coupled to an ultrasonic transducer (19),
   **characterized**
   **in that** the sonotrode (13) is designed as a rod-shaped, axially emitting longitudinal oscillator wherein the emitting surface (14) of the sonotrode (13) extends essentially over the entire width of the channel (15)
   and **in that** the reaction chamber (12) depth (12b) which is essentially vertical with respect to the emitting surface (14) is lower than the maximum effective depth of the sonotrode (13).

3. A device as claimed in either of claims 1 and 2, wherein the depth (12b) of the reaction chamber (12) is alterable.

4. A device as claimed in claim 2, wherein the through-flow channel (15) has an essentially rectangular cross section.

5. A device as claimed in any of claims 1 to 4, wherein the sonotrode (13) is designed as a $\lambda/2$ (or multiple) longitudinal oscillator which is fastened by a flange (20) provided on a node of oscillation in an aperture (21) of the housing (11).

6. A device as claimed in any of claims 1 to 5, wherein the reaction chamber (12) has internals (22) for improving the flow behavior and mixing behavior.

7. The use of a batchwise device according to claim 1 on a laboratory scale for designing a continuous device according to claim 2 working on a production scale.

8. The use of a device as claimed in any of claims 1 to 6 for producing miniemusions, especially multiphase miniemulsions, having an average drop diameter of less than 1 $\mu$m.

9. The use as claimed in claim 8 for producing polymer dispersions by free-radical aqueous emulsion polymerization of ethylenically unsaturated monomers.

10. The use as claimed in either of claims 8 and 9, in which pulverulent solids are bound into one disperse phase of the emulsion.

11. The use of a device as claimed in any of claims 1 to 6 for screening emulsification auxiliaries.

EP 1 042 063 B1

Fig. 1

Fig. 2

Fig. 3

Fig. 4

Fig. 5

Fig. 6

**Fig. 7**

**Fig. 8a**

**Fig. 8b**